# EUROPEAN PATENT SPECIFICATION

(11) **EP 3 150 848 B1**
(45) Date of publication and mention of the grant of the patent: **01.09.2021**
(21) Application number: 14893081.1
(22) Date of filing: 29.05.2014
(51) Int. Cl.: F03D 1/06

(54) **SCREWED CONNECTION FOR A MODULAR BLADE**
SCHRAUBVERBINDUNG FÜR EINE MODULARE SCHAUFEL
RACCORDEMENT PAR VISSAGE POUR PALE MODULAIRE

(43) Date of publication of application: 05.04.2017
(73) Proprietor: Nabrawind Technologies SL, 31002 Pamplona (ES)
(72) Inventor: SANZ Pascual, Eneko, E-31002 Pamplona (Navarra) (ES)
(74) Representative: Igartua, Ismael
(86) International application number: PCT/ES2014/000088
(87) International publication number: WO 2015/181401

(56) References cited:
- EP-A1- 2 381 093
- EP-A1- 2 930 350
- EP-A2- 2 199 604
- WO-A1-2011/070137
- WO-A1-2011/070137
- WO-A2-2010/086297
- ES-A1- 2 342 998
- GB-A- 2 472 460
- US-A1- 2010 122 442

## Description

### Field of the invention

The present invention addresses the bolted joint on the modules of a wind turbine blade and the process of connecting some modules obtained by specific manufacturing and a laminate more stylized than currently available.

### Background of the invention

The blade module attachment and the inserts used for this purpose are extensively described in the state of the art.

Thus, in patent ES2265760, the metal inserts are housed and secured axially on the walls of the longitudinal resistant structure (blade beam). The housings are machined and the insert connection is secured with an adhesive. A cavity (16) is machined on a solid laminate (12) of carbon fibers (13) and glass fibers (14) and an insert (10) is inserted. The insert head can be of two types: metal U-shaped parts for traction bolts and shear connection element. These heads conceived for bolting insert pairs are large and heavy, since they include a housing for enabling the connection of nuts for pre-tensioning bolts, penalizing the connection in cost and extra weight.

In patent ES2369442, the inserts are embedded and inserted (first machining them as in the previous case) into the composite material constituting the blade. The insert body has a cylinder or cone shape. There are two types according to their placement:
Machined insert. A hole is machined into an already cured lamination, into which an insert, head (2) and body (3) are inserted, and affixed with adhesive (4). The lamination is made on a continuous thickness throughout the width of the section. Disadvantage. The lamination is very thick and has a high cost in structurally unnecessary material, adding to the total weight of the module.

Embedded insert. The insert is laminated to add a reinforcement part (5) during the lamination process. The same laminate resin bonds the insert to the material after curing. A separator (6) is also added between inserts. Disadvantages. Unlike a machining process, this manual process is not easily automated and thus highly susceptible to environmental conditions and skill level of the workers. Moreover, to attain an acceptable load capacity, an additional part (6) is incorporated. This part must also be affixed onto the metal insert before lamination. Thus, in order to eliminate the disadvantage of extra mass from the option above (machined insert), other clear disadvantages are added such as the susceptibility of the process and the elevated extra cost arising from the part and additional affixing process.

Furthermore, the tightening of joint elements used in these inserts is a complex process that either requires an external support point or is done by opposing pairs to utilize the action/reaction balance of each pair, thus requiring no external support. The connection process solution differs in the mentioned patents but always has a connection element: Patent ES2265760 uses a bolt and two nuts between opposing heads while patent ES2369442 uses two connections of a single bolt and nut with different peculiarities (left-hand thread on insert, right-hand thread on nut and machined head for wrench fastening). In both cases, the two pairs are compensated with each other (the two-nut pair or the bolt - nut pair) and the extra support point is avoided, but in any case there is a need for a preferentially rectangular, heavy and expensive insert head enabling the housing of the mentioned nuts, while this new proposal defines two alternatives for pre-tensioning bolts. When pre-tensioning by torque, the bolts are compensated with the adjacent connection element. When pre-tensioning by pulling, the modules are separated to apply the necessary tension to the joint on all the bolts at the same time, thus eliminating the need for heads between modules and reducing the connection parts to a minimum expression and thus attaining a significant advantage in mass and cost compared with current state of the art. In both cases, all the bolts are pre-tensioned simultaneously by applying torque or pulling, which entails a substantial novelty regarding the state of the art.

GB2472460A discloses a bolted joint for connecting opposing modules of a modular blade. Each opposing module comprises an insert with threated holes housed therein so that the connection between inserts is made through bolts per pair of threaded holes. Each bolt comprises two threaded ends configured to be threaded in the threaded holes of the insert.

EP2381093A1 also discloses a bolted joint for connecting opposing modules of a modular blade. In one of the modules there is housed a threaded insert so that one threaded end of the bolt is coupled therein. A washer and a corresponding nut is used at the other threaded end of each bolt to tighten and to tension it. An intermediate ring is disposed between the modules to prevent the defibration of the outer lateral skin of the modules.

### Description of the invention

The present invention is related with a bolted joint of the modules of a wind turbine blade through a single bolt per pair of an opposing threaded inserts, previously housed in the laminates of the modules. The invention refers to the assembly of modules so that the joint is fully simplified.

The object of the invention is to provide a method for joining two blade modules through some threaded inserts to other inserts equally facing the former via a single bolt. Each opposing module comprises a threaded insert housed by machining inside the opposing modules, the connection between inserts being made through a single bolt per pair of facing inserts. Each bolt comprises two threaded ends configured to be threaded in the inserts of the modules.

The method of the invention includes the following steps:
- manufacturing blade modules containing internal threaded inserts where said threads have been done as a final step following facing of the connection surface of these modules,
- installing bolts inside the inserts of one of the modules,
- precision positioning of the other module against it,
- turning the bolts so that the bolts penetrate the other module leaving a gap between the modules,
- separating the modules (1, 1') so that the gap (7) increases, and
- pre-tensioning all the bolts by inserting a spacer over each bolt in the increased gap between the modules after the spacers have being compressed.

The connection process can use procedures for pre-tensioning all the bolts at once through the separation of the modules. Where the steps to take are:
- separating the modules by mechanical engagement through an assembly comprising ribs and hydraulic cylinders or thermal effects on the spacers (contraction by cooling before placement),
- installing spacers on the bolts, and
- relaxation and completion of the pre-tensioning process.

Unlike patent ES2369442, the particular advantage of this new alternative is that there is no need to change the direction of the threading when pre-tensioning through pulling and the bolt has a right-hand thread on both sides. This thus simplifies the initial insertion of bolts into the modules, a task that in any case also depends on highly specific module manufacturing details.

The pre-tensioning process can also be made by tightening torque, though no using an external support point to apply this tightening torque, tensioning by adjacent pairs and utilizing the action/reaction balance of each pair. For the purpose of this practical embodiment, an intermediate part is mounted on the bolt to permit the rotation thereof. In this case, the threads on the inserts and bolts turn one in each direction on each module so that the turning creates opposite advances, whereby pulling and consequently pre-tensioning the bolt.

### Brief description of the drawings

A brief description will be given below for a series of drawings useful for better understanding the invention. These drawings serve as a mere example and are expressly related yet not restricted to one embodiment of this invention.
Figure 1 is a plant view of the shape of the laminate layers in the insert area for obtaining the volume where the cavity will subsequently be machined for the inserts.
Figure 2 depicts a cross-section of selected lamination before machining the cavities for the inserts.
Figure 3 is a cross-section and profile view with the lamination, housing and insert positioned before insertion.
Figure 4 illustrates a lamination cross-section with the inserts in the housings.
Figure 5 is a cross-section in plant view of two blade modules facing each other and joined together according to the method of the invention.
Figure 6 is the front and side view of a bolt and spacer subdivided into two parts.
Figure 7 depicts four steps of an embodiment of the method of the invention: a) installing the mechanical spacer, b) separating the modules, c) installing the spacers and d) relaxation.
Figure 8 depicts two practical embodiments of the mechanical engagement.
Figure 9 illustrates a template to employ on the modules for applying the spacers.
Figure 10 depicts different practical embodiments of intermediate parts enabling the application of torque, and may have an orifice for a lever, with or without key, in a hexagonal shape or contour with teethed pinions.

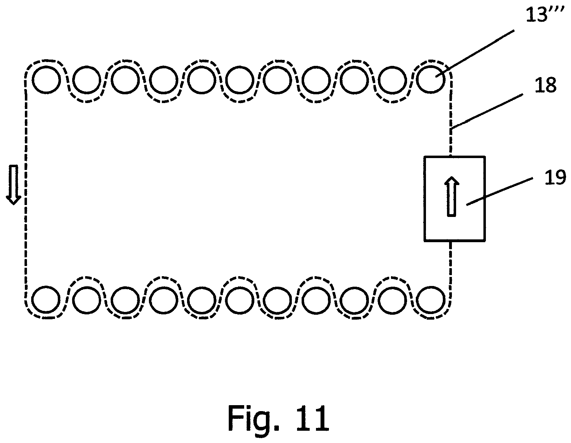

Figure 11 illustrates the joint engagement of the pinion-chain tightening device on a blade module.
Figure 12 depicts the complete connection of two blade modules.

### Detailed description of the invention

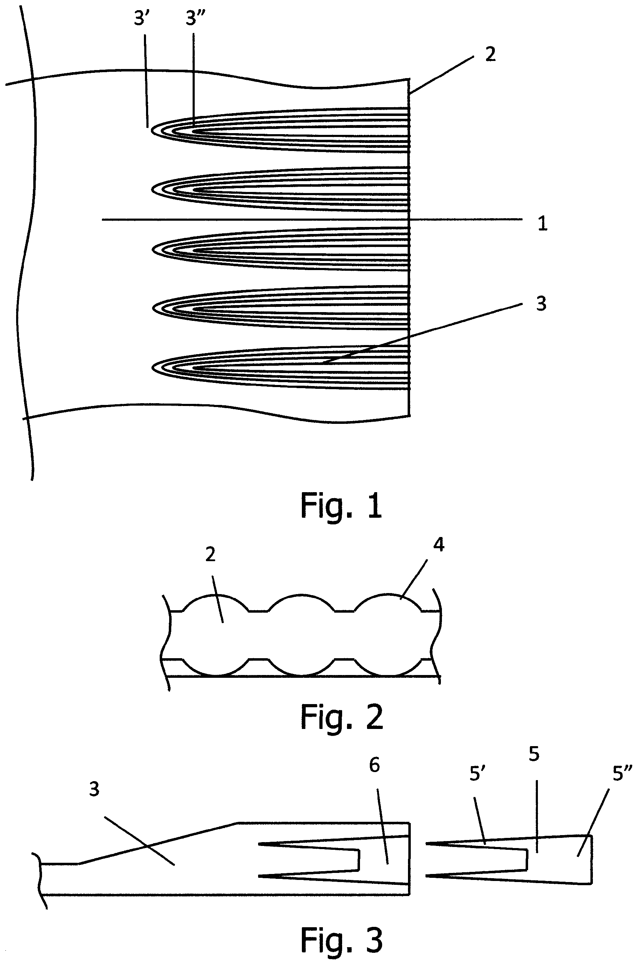

Figure 1 is a cross-section plant view of a wind turbine blade module (1). This module (1) is part of the blade beam and its main characteristic is that only the parts where the inserts will be housed on the part corresponding to the free wall (2) are laminated, reinforcing these areas with an accumulation of layers. As these layers of laminate (3) will be superimposed from the longest layer (3') to the shortest layer (3"), the laminate available on the surface of the module (1) forms a circular protrusion (4) as shown in figure 2. This thus enables the lamination of only the volume corresponding to the spot that will be machined and subsequently house the inserts. The layers of laminate (3) are available during the beam-shaping process and the circular protrusions (4) are created after curing along the entire upper and lower part of the free walls (2) of the beam. This process can be done automatically or manually, layer by layer or by forming small prefabricated elements.

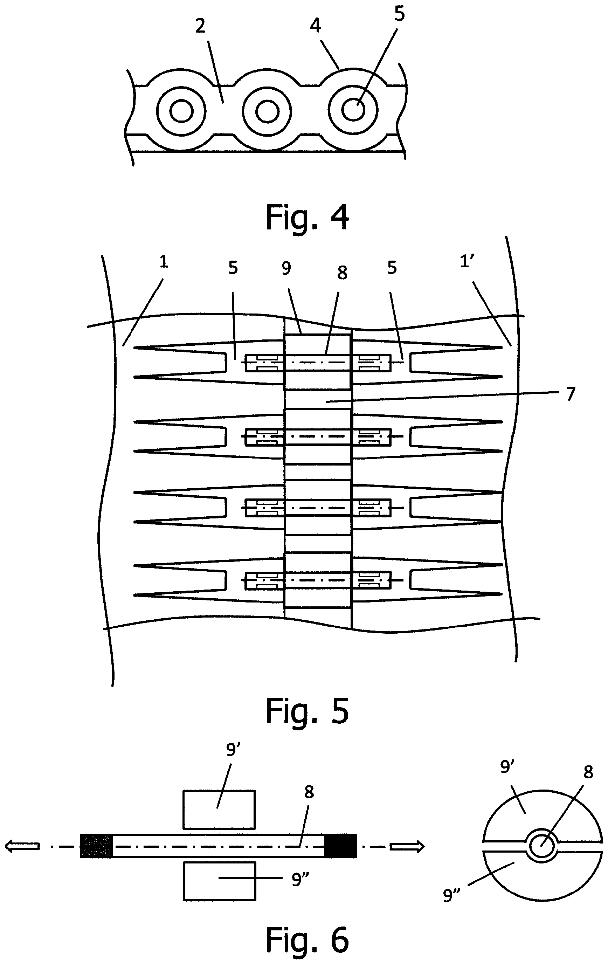

Figure 3 depicts the laminated volume (3), housing (6) and insert (5). The insert (5) has a body (5') and a head (5") where, subsequently, when affixing the inserts and facing their free wall, a thread will be machined therein. This connection is thus made by machining the housing (6) to face the free wall (2), subsequently fitting the inserts (5) into the housings (6) and then affixing with an adhesive, yielding the results shown in figure 4. Finally, with a view to controlling the longitudinal and angular position of the threads on the inserts, their free surfaces are faced as the last step in machining the threads. With the foregoing, the module (1) is thus ready for connection with another module.

The invention provides a method for connecting two blade modules (1 and 1') via some inserts (5) with internal threads, thus attaining this connection through a single bolt (8) per pair of facing inserts (5), as shown in figure 5.

Each opposing module (1 and 1') comprise a threaded insert (5) housed by machining inside the opposing modules (1 and 1'), the connection between inserts (5) being made through a single bolt (8) per pair of facing inserts (5). Each bolt (8) comprises two threaded ends configured to be threaded in the inserts (5) of the modules (1 and 1').

The method of the invention includes the following steps:
- manufacturing blade modules (1 and 1') containing internal threaded inserts (5) where said threads have been done as a final step following facing of the connection surface of these modules (1 and 1'),
- screwing all the bolts (8) into the inserts (5) of one of the modules (1),
- joining together the inserts (5) of the new module (1'), aligning it with the previous module (1),
- turning the bolts (8) to screw them into both modules (1 and 1'), so that the bolts (8) penetrate the new module (1') leaving a gap (7) between the modules (1 and 1'),
- separating the modules (1, 1') so that the gap (7) increases, and
- pre-tensioning all the bolts (8) by inserting a spacer (9) over each bolt (8) in the increased gap (7) between the modules (1 and 1') after the spacers (9) have being compressed.

The appropriate tension in this connection can be attained in one of the two manners described below: a) by separating the modules (1 and 1') with a mechanical engagement (10) and inserting a spacer part (9) on the bolt (8), or b) by putting a thermally retracted spacer part (9) on the bolt (8).

Figure 6 depicts an embodiment of the bolt (8) with the spacer part (9) covering it. The spacer part (9) comprises two semi-cylindrical gaps with an upper part (9') and a lower part (9"). This subdivision is necessary because the placement of spacers between the free faces of the inserts is made when the bolts (8) are already in place.

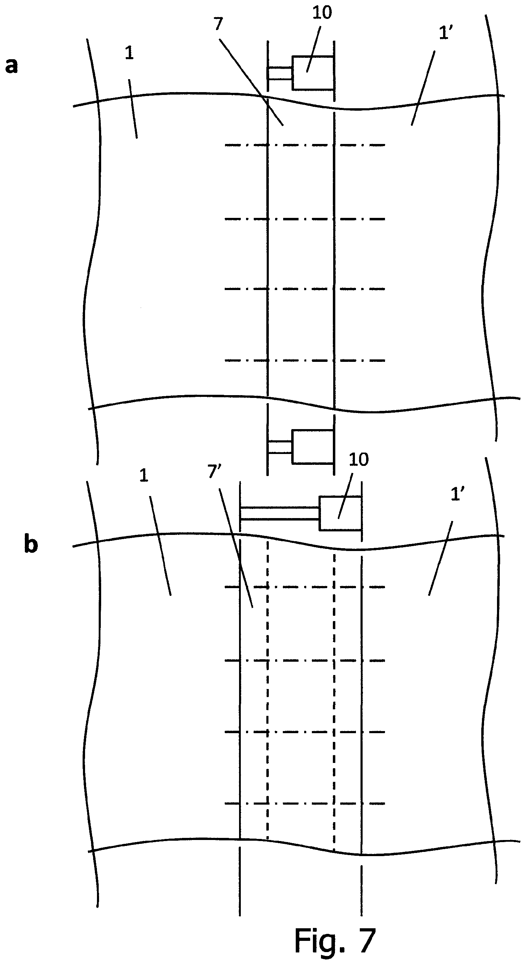

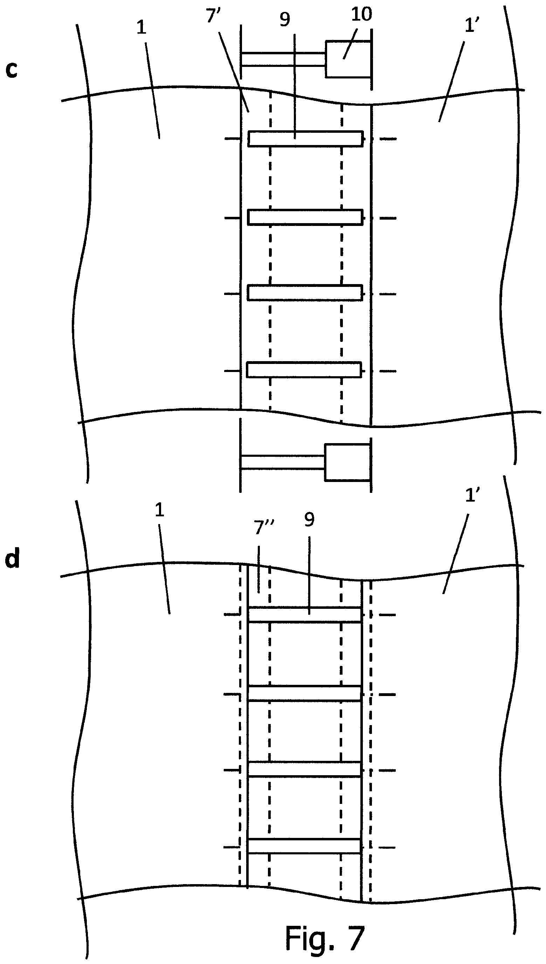

Figure 7 illustrates the different stages of separating the modules (1 and 1') for mechanical separation option a). A mechanical engagement (10) is made between the modules (1 and 1'). As the gap (7) between the modules (1 and 1') widens and becomes a larger gap (7'), the bolts (8) should be pulled. In this rendering, a spacer part (9) is then incorporated on each bolt (8) to cover it. The length of the spacer part (9) is less than the created gap (7') but longer than the initial gap (7). When the mechanical engagement (10) is disengaged, the new gap (7") is smaller than the gap (7') created with the engagement and larger than the initial gap (7), thus maintaining the spacer parts (9) compressed and the bolts (8) pre-tensioned. This thus creates a traction connection pre-tensioned by pulling.

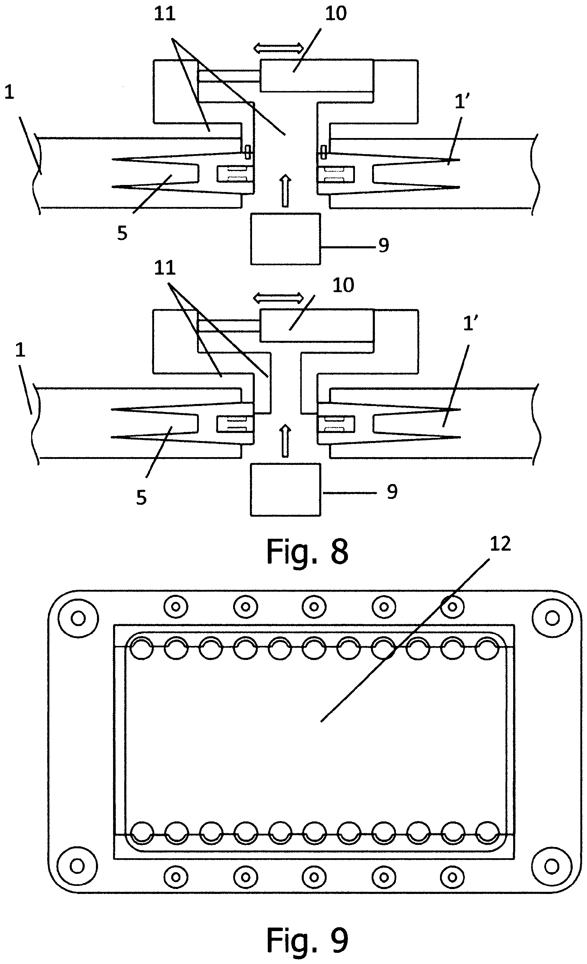

Figure 8 depicts various practical embodiments to create the separation of modules (1 and 1'). The ends (11) of the mechanical engagement (10) can engage on the free faces of the inserts (5) or on the sides of the inserts (5) with shearing pins. The selection of the manner of engagement will be determined by the dimensions of the existing gap (7) and the section necessary for the spacers. If the engagement is made on the side of the insert (5), there will be elements that secure both parts such as pins, cotters or similar elements. The separating load can be distributed through a template (12) as shown in figure 9. The template (12) is used when the selected pre-tensioning system is the simple mechanical separation of the modules through mechanical engagements (10) such as hydraulic cylinders. The template (12) serves to transmit the force of these hydraulic cylinders between both modules (1 and 1') and therefore separate them from each other. The rigidity of the template (12) will be essential in the practical embodiment to keep pulling homogenous.

The second option, i.e., option b), relates to engaging the bolt (8) and the spacer (9) through thermal effects. Thus, the bolt (8) is dilated so that the existing gap (7) between the modules (1 and 1') increases, enabling the incorporation of the spacer (9) that was previously contracted by cooling. For example, liquid nitrogen can be used for cooling and contracting the spacers (9) and electrical resistors used for heating and dilating the bolts (8). The length of the spacers at ambient temperature must be greater than the space between the modules, while the length of the contracted spacers should be less than the space between modules with the bolts dilated. The return of both elements to their normal state thus provokes the compression of the spacer and the pulling or pre-tensioning of the bolts (8).

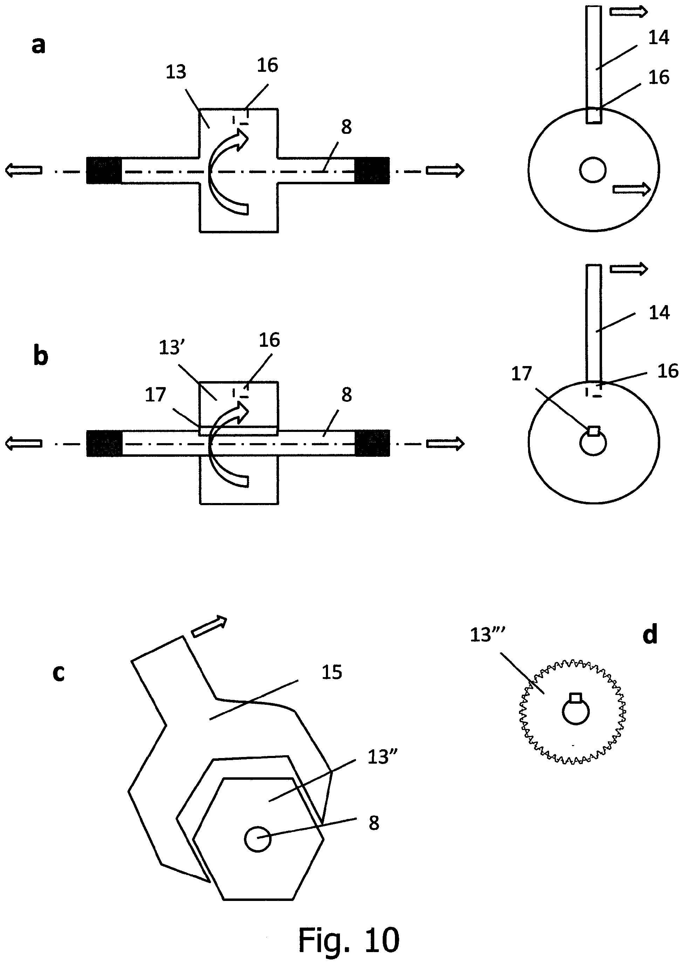

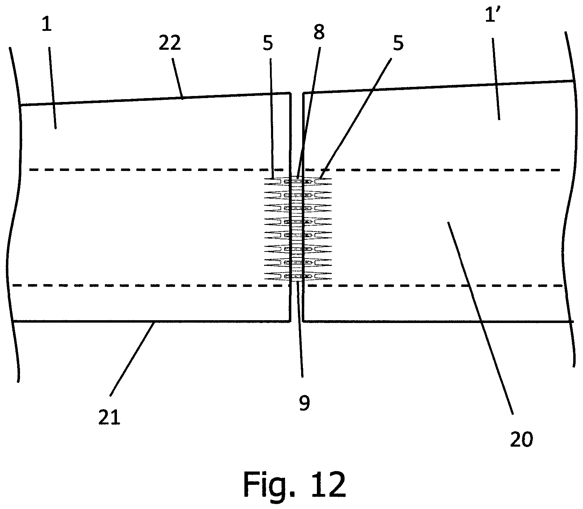

When pre-tensioning by torque as shown in figure 10, the bolt (8) can be accompanied by an intermediate part whose purpose is not restricted to a spacer part as utilized in the previous figures, but can also be an intermediate part (13) that provides an operable surface for the blade (8) for applying torque to create the pre-tensioning when compressing the spacer. A spot for applying rods (14), wrenches (15) or other devices to apply torque to the assembly. It is pre-tensioned by torque; the bolt (8) has a left-hand thread and another right-hand thread so that the rotation creates opposing advances on each end and is pulled. Thus, option a) in figure 10 depicts an intermediate part (13) against the bolt (8) and a hole (16) on its surface so that it can house a rod (14), with which torque can be applied. Option b) depicts an intermediate part (13') comprising two parts joined together with a cotter pin (17) on the bolt. Likewise, they will also have a hole (16) so that a rod (14) can apply tightening torque. Option c) depicts another embodiment of the intermediate part (13") incorporated on the bolt (8) or as a part against it, which presents a hexagonal shape and permits the use of conventional wrenches (15) for tightening. Option d) depicts another alternative for the intermediate part. This embodiment has been conferred with a toothed shape (13'"). The action of a chain (18) that engages the teeth on the intermediate toothed part (13'") attains full tightening torque for all the bolts (8) in unison as shown in figure 12. A motor (19) moves the chain (18) that alternatively engages the intermediate toothed parts (13'") thus configuring the tightening torque to utilize the action/reaction balance and also requiring no external support for tensioning.

Figure 12 depicts the two modules (1 and 1') joined with their respective bolts (8) on which the spacers (9) are incorporated. The part corresponding to the inserts (5) will be covered subsequently with a fairing and mounted on the flange of the beam (20) located between the leading edge (21) and the trailing edge (22) of the blade.

## Claims

1. Method for connecting opposing modules (1, 1') of a modular blade, each opposing module (1, 1') comprising inserts (5) housed by machining inside the opposing modules (1, 1'), the connection between inserts (5) being made through a single bolt (8) per pair of facing inserts (5), each bolt (8) comprising two threaded ends configured to be threaded in the inserts (5) of the modules (1, 1'), the method comprises the following steps:
- manufacture of modules (1, 1') where the creation of threads on the inserts (5) is done as a final step following facing of the connection surface of these modules (1, 1'),
- insertion of bolts (8) into one of the modules (1),
- precision positioning of the other module (1') against said one of the modules (1),
- turning the bolts (8) so that the bolts (8) penetrate the other module (1') leaving a gap (7) between the modules (1, 1'),
- separating the modules (1, 1') so that the gap (7) increases, and
- pre-tensioning all the bolts (8) by inserting a spacer (9) over each bolt (8) in the increased gap (7) between the modules (1, 1') after the spacers (9) have being compressed.

2. Method according to claim 1, wherein the pre-tensioning is done on all the bots (8) simultaneously by pulling with thermal effects, the threads being right-hand threads, with the following steps:
i) dilation of the bolts (8) through electrical resistors,
ii) contraction of the spacers (9) through previous cooling,
ii) insertion of the spacers (9), subdivided into two parts to simplify their incorporation on both sides of the already mounted bolts (8), and
iii) relaxation of the dilation of the bolt (8) and contraction of the spacer (9) by ambient temperature.

3. Method according to claim 1, wherein the pre-tensioning is done on all bolts (8) simultaneously by pulling, the threads being right-hand threads, with the following steps:
i) separation of the modules with a mechanical separator (10), generating a second gap (7') between the modules (1,1') which is larger than the first gap (7),
ii) insertion of a spacer (9), subdivided into two parts to simplify its incorporation on both sides of the already mounted bolts (8), and
iii) relaxation of the mechanical spacer (10), generating a third gap (7") which is smaller than the second gap (7') but larger than the first gap (7).

4. Method according to claim 3, wherein the pre-tensioning is done by mechanical engagement through a motor (19) that moves a chain (18) and simultaneous application of torque on all toothed inserts (13"') of the module.

## Patentansprüche

1. Verfahren zum Verbinden gegenüberliegender Module (1,1') einer modularen Schaufel, wobei jedes der gegenüberliegenden Module (1,1') durch maschinelle Bearbeitung in das Innere der gegenüberliegenden Module (1,1') eingebrachte Einsätze (5) umfasst, wobei die Verbindung zwischen den Einsätzen (5) durch jeweils einen einzelnen Bolzen (8) pro Paar gegenüberliegender Einsätze (5) ausgeführt wird, wobei jeder Bolzen (8) zwei mit Gewinde versehene Enden umfasst, die so ausgebildet sind, dass sie in die Einsätze (5) der Module (1,1') eingeschraubt werden können, wobei das Verfahren die folgenden Schritte umfasst:
- Fertigung von Modulen (1,1'), wobei das Erstellen von Gewinden an den Einsätzen (5) als letzter Schritt nach dem Plandrehen der Verbindungsfläche dieser Module (1,1') erfolgt,
- Einsetzen von Bolzen (8) in eines der Module (1),
- präzises Positionieren des anderen Moduls (1') an das genannte eine Modul (1),
- Verdrehen der Bolzen (8), sodass die Bolzen (8) in das andere Modul (1') eindringen, wobei ein Spalt (7) zwischen den Modulen (1,1') verbleibt,
- Trennen der Module (1,1'), sodass der Spalt (7) größer wird, und
- Vorspannen aller Bolzen (8) durch Einsetzen eines Abstandshalters (9) über jeden Bolzen (8) in den vergrößerten Spalt (7) zwischen den Modulen (1,1'), wobei die Abstandshalter (9) zuvor zusammengedrückt werden.

2. Verfahren nach Anspruch 1, wobei das Vorspannen durch Ziehen unter Wärmeeinwirkung an allen Bolzen (8) gleichzeitig erfolgt und zwar mit nachfolgenden Schritten, wobei die Gewinde Rechtsgewinde sind:
i) Dehnen der Bolzen (8) durch elektrische Widerstände,
ii) Schrumpfen der Abstandshalter (9) durch vorherige Kühlung,
ii) Einsetzen der Abstandshalter (9), die zur einfacheren Einbringung auf beiden Seiten der bereits eingebauten Bolzen (8) in zwei Teile unterteilt sind, und
iii) Entlasten der Dehnung des Bolzens (8) und Schrumpfen des Abstandshalters (9) durch die Umgebungstemperatur.

3. Verfahren nach Anspruch 1, wobei das Vorspannen durch Ziehen an allen Bolzen (8) gleichzeitig erfolgt und zwar mit nachfolgenden Schritten, wobei die Gewinde Rechtsgewinde sind:
i) Trennen der Module mit einem mechanischen Abstandshalter (10), wobei zwischen den Modulen (1,1') ein zweiter Spalt (7') entsteht, der größer als der erste Spalt (7) ist,
ii) Einsetzen eines Abstandshalters (9), der zur einfacheren Einbringung auf beiden Seiten der bereits eingebauten Bolzen (8) in zwei Teile unterteilt ist, und
iii) Entlasten des mechanischen Abstandshalters (10), wodurch ein dritter Spalt (7") entsteht, der kleiner als der zweite Spalt (7'), aber größer als der erste Spalt (7) ist.

4. Verfahren nach Anspruch 3, wobei das Vorspannen durch mechanischen Eingriff über einen Motor (19), der eine Kette (18) bewegt, und gleichzeitiges Beaufschlagen aller gezahnten Einsätze (13"') des Moduls mit einem Drehmoment erfolgt.

## Revendications

1. Procédé de connexion de modules opposés (1, 1') d'une lame modulaire, chaque module opposé (1, 1') comprenant des inserts (5) logés par usinage à l'intérieur des modules opposés (1, 1'), la connexion entre les inserts (5) étant réalisée par l'intermédiaire d'un seul boulon (8) par paire d'inserts (5) en regard, chaque boulon (8) comprenant deux extrémités filetées configurées pour être vissées dans les inserts (5) des modules (1, 1'), le procédé comprend les étapes suivantes :
- fabrication de modules (1, 1') où la création de filets sur les inserts (5) est réalisée en tant qu'étape finale après le dressage de la surface de connexion de ces modules (1, 1'),
- insertion des boulons (8) dans l'un des modules (1),
- positionnement précis de l'autre module (1') contre ledit un des modules (1),
- rotation des boulons (8) de sorte que les boulons (8) pénètrent dans l'autre module (1') en laissant un espace (7) entre les modules (1, 1'),
- séparer les modules (1, 1') de manière à ce que l'espace (7) augmente, et
- précontrainte tous les boulons (8) en insérant une entretoise (9) sur chaque boulon (8) dans l'espace accru (7) entre les modules (1, 1') après que les entretoises (9) ont été comprimées.

2. Procédé selon la revendication 1, dans lequel la précontrainte est réalisée sur tous les boulons (8) simultanément par traction avec effets thermiques, les fils étant des fils à droite, avec les étapes suivantes :
i) dilatation des boulons (8) par l'intermédiaire de résistances électriques,
ii) contraction des entretoises (9) par refroidissement préalable,
ii) insertion des entretoises (9), subdivisées en deux parties pour simplifier leur incorporation des deux côtés des boulons (8) déjà montés, et
iii) relaxation de la dilatation du boulon (8) et de la contraction de l'entretoise (9) par la température ambiante.

3. Procédé selon la revendication 1, dans lequel la précontrainte est effectuée sur tous les boulons (8) simultanément par traction, les filetages étant des filetages à droite, avec les étapes suivantes :
i) séparation des modules avec un séparateur mécanique (10), générant un deuxième espace (7') entre les modules (1,1') qui est plus grand que le premier espace (7),
ii) insertion d'une entretoise (9), subdivisée en deux parties pour simplifier son incorporation des deux côtés des boulons (8) déjà montés, et
iii) relaxation de l'entretoise mécanique (10), générant un troisième espace (7") qui est plus petit que le deuxième espace (7') mais plus grand que le premier espace (7)

4. Procédé selon la revendication 3, dans lequel la pré-tension est réalisée par engagement mécanique par l'intermédiaire d'un moteur (19) qui déplace une chaîne (18) et l'application simultanée d'un couple sur tous les inserts dentés (13"') du module.
